# EUROPÄISCHE PATENTANMELDUNG

(11) **EP 2 578 352 A2**
(43) Veröffentlichungstag der Anmeldung: **10.04.2013**
(21) Anmeldenummer: 12006067.8
(22) Anmeldetag: 27.08.2012
(51) Int. Cl.: B23P 19/02, B23Q 1/62, B30B 15/30

(54) **Positioniereinrichtung für eine Presseinrichtung**

(30) Priorität: 07.10.2011 DE 102011115326
(71) Anmelder: Ludwig Ehrhardt GmbH, 35321 Laubach (DE)
(72) Erfinder: Zachau, Henning, 01689 Weinböhla (DE); Thoelen, Johannes, 57271 Hilchenbach (DE); Erhardt, Winfried, 35321 Laubach (DE)
(74) Vertreter: Beier, Ralph

(57) **Zusammenfassung**

Die Erfindung betrifft eine Positioniereinrichtung (1) zur Positionierung eines Werkstücks in einer Presseinrichtung, die das Werkstück in einer bestimmten Pressrichtung presst. Die erfindungsgemäße Positioniereinrichtung umfasst eine Werkstückaufnahme zur Aufnahme des Werkstücks und eine erste Linearführung zum linearen Verschieben der Werkstückaufnahme in der Presseinrichtung entlang einer X-Achse, wobei die X-Achse quer zu der Pressrichtung ausgerichtet ist. Die Erfindung umfasst zusätzlich eine zweite Linearführung zum linearen Verschieben der Werkzeugaufnahme in der Presseinrichtung entlang einer Y-Achse, wobei die Y-Achse quer zu der X-Achse und quer zu der Pressrichtung ausgerichtet ist.

## Beschreibung

Die Erfindung betrifft eine Positioniereinrichtung zur Positionierung eines Werkstücks in einer Presseinrichtung.

Aus dem Stand der Technik sind Längspresseinrichtungen bekannt, die beispielsweise dazu verwendet werden können, Naben und Wellen ineinander zu pressen. Derartige Längspresseinrichtungen können als Tischanlage konstruiert sein, wobei ein Druckstück mit einer Stößelbohrung über einem Tisch in senkrechter Richtung von einem Hydraulikzylinder bewegt werden kann. Das zu pressende Werkstück wird hierbei auf dem Tisch unter dem Druckstück positioniert, woraufhin der Hydraulikzylinder das Druckstück nach unten bewegt und dadurch den Pressvorgang durchführt. Die Positionierung des Werkstücks auf dem Tisch der Längspresseinrichtung erfolgt beispielsweise durch werkstückspezifische Werkstückaufnahmen, was jedoch bei kleinen Fertigungslosgrößen störend ist, da dann erhebliche Kosten für die werkstückspezifischen Werkstückaufnahmen anfallen.

Presseinrichtungen und andere Werkzeugmaschinen sind auch bekannt aus DE 20 2008 009 357 U1, DE 90 07 459 U1, EP 1 361 006 A1 und WO 00/22229 A1.

Ferner ist aus JP 5 104 368 A1 ein X-Y-Positioniertisch bekannt, der jedoch nicht für eine Presseinrichtung vorgesehen ist.

Der Erfindung liegt deshalb die Aufgabe zugrunde, eine Positioniereinrichtung zu schaffen, die es ermöglicht, ein Werkstück in einer Presseinrichtung zu positionieren, ohne dass werkstückspezifische Werkstückaufnahmen erforderlich sind.

Diese Aufgabe wird durch eine erfindungsgemäße Positioniereinrichtung gemäß dem Hauptanspruch gelöst.

Die erfindungsgemäße Positioniereinrichtung sieht zum Positionieren der Werkstückaufnahme mit dem darin befindlichen Werkstück zwei Linearführungen vor, die jeweils eine Linearverschiebung ermöglichen, um das Werkstück zu positionieren. Die erste Linearführung ermöglicht hierbei eine Verschiebung der Werkstückaufnahme in der Presseinrichtung entlang einer X-Achse, wobei die X-Achse quer zu der Pressrichtung ausgerichtet ist. Die zweite Linearführung ermöglicht dagegen eine Verschiebung in der Presseinrichtung entlang einer Y-Achse, wobei die Y-Achse quer zu der X-Achse und quer zu der Pressrichtung ausgerichtet ist.

Der im Rahmen der Erfindung verwendete Begriff einer Querausrichtung stellt vorzugsweise auf eine rechtwinklige Ausrichtung ab. So ist die X-Achse vorzugsweise rechtwinklig zu der Pressrichtung ausgerichtet, während die Y-Achse vorzugsweise rechtwinklig zu der X-Achse und rechtwinklig zu der Pressrichtung ausgerichtet ist. Der im Rahmen der Erfindung verwendete Begriff einer Querausrichtung ist jedoch allgemein zu verstehen und umfasst auch andere stumpfe Winkel als exakt rechte Winkel.

Darüber hinaus weist die erfindungsgemäße Positioniereinrichtung vorzugsweise eine Arretierungseinrichtung auf, um die erste Linearführung und/oder die zweite Linearführung zu arretieren. In einem bevorzugten Ausführungsbeispiel der Erfindung ermöglicht die Arretierungseinrichtung sowohl eine Arretierung der ersten Linearführung als auch eine Arretierung der zweiten Linearführung, so dass eine einzige Arretierungseinrichtung ausreicht, um die beiden Linearführungen zu arretieren.

In dem bevorzugten Ausführungsbeispiel der Erfindung ermöglicht die Arretierungseinrichtung eine stufenlose Arretierung der ersten Linearführung und/oder der zweiten Linearführung in verschiedenen, stufenlos einstellbaren Positionen in der Presseinrichtung.

Weiterhin ist zu erwähnen, dass die Arretierungseinrichtung die beiden Linearführungen vorzugsweise reibschlüssig arretiert. Die Erfindung ist jedoch hinsichtlich des technischphysikalischen Wirkungsprinzips der Arretierungseinrichtung nicht auf eine reibschlüssige Arretierung beschränkt, sondern grundsätzlich auch mit einer formschlüssigen Arretierung realisierbar.

In dem bevorzugten Ausführungsbeispiel der Erfindung weist die Arretierungseinrichtung einen Klemmzylinder auf, um die erste Linearführung und/oder die zweite Linearführung festklemmen zu können. Der Klemmzylinder weist hierbei vorzugsweise mindestens ein Federelement (z.B. Tellerfedern) auf, um die Linearführungen festzuklemmen, wobei die Federkraft des Federelements die reibschlüssige Arretierung der Linearführungen bewirkt. Darüber hinaus weist der Klemmzylinder vorzugsweise einen Druckmittelanschluss auf, um ein fluides Druckmittel (z.B. Hydrauliköl, Druckluft) zum Lösen der Klemmung zuzuführen. Die Klemmung wird hierbei also durch die Kraft des Federelements bewirkt, wohingegen die Klemmung durch eine Druckmittelbeaufschlagung mit dem Druckmittel wieder gelöst wird. Die Arretierungseinrichtung arbeitet also vorzugsweise selbstklemmend, d.h. ohne eine ausreichende Druckmittelbeaufschlagung bewirkt das Federelement ein Festklemmen der Linearführung.

Die zum Lösen der Arretierungseinrichtung erforderliche Druckmittelbeaufschlagung kann beispielsweise durch ein muskelkraftbetriebenes Betätigungsglied (z.B. Fußpedal) bewirkt werden. Der Bediener einer Presseinrichtung mit der erfindungsgemäßen Positioniereinrichtung tritt dann auf das Fußpedal und erzeugt damit einen ausreichenden Druck in dem Klemmzylinder der Arretierungseinrichtung, um die Arretierung zu lösen. Nach dem Betätigen des Fußpedals und dem dadurch bewirkten Lösen der Klemmverbindung kann der Bediener dann die Werkstückaufnahme manuell an der gewünschten Position in der Presseinrichtung positionieren. Anschließend wird der Druck in dem Klemmzylinder wieder abgebaut, woraufhin das Federelement in dem Klemmzylinder die beiden Linearführungen festklemmt und die Werkstückaufnahme dadurch in der gewünschten Position fixiert. Der Druckabbau nach der Positionierung der Werkstückaufnahme kann beispielsweise durch Öffnen eines Ventils erfolgen, indem der Bediener das Fußpedal wieder löst.

In einer anderen Variante der Erfindung erfolgt der Druckaufbau zum Lösen der Klemmverbindung dagegen in gesteuerter Weise durch eine Steuereinheit, die beispielsweise ein Ventil öffnet, das einen Druckmittelfluss von einer Druckquelle (z.B. Hydraulikpumpe) zu dem Druckmittelanschluss des Klemmzylinders freigibt. Diese Variante der Erfindung eignet sich insbesondere bei einer vollständigen Integration der erfindungsgemäßen Positioniereinrichtung in eine Presseinrichtung, die ohnehin eine entsprechende Druckquelle aufweist.

Darüber hinaus weist die erfindungsgemäße Positioniereinrichtung vorzugsweise Anschläge für die erste Linearführung und/oder die zweite Linearführung auf, wobei die beiden Anschläge den Bewegungsspielraum der jeweiligen Linearführung begrenzen und vorzugsweise durch Stellglieder (z.B. Stellschrauben) eingestellt werden können.

Ferner kann die erfindungsgemäße Positioniereinrichtung ein Lineal aufweisen, um die Position der ersten Linearführung und/oder der zweiten Linearführung anzuzeigen.

In dem bevorzugten Ausführungsbeispiel der Erfindung weist die Arretierungseinrichtung eine Klemmplatte auf, die auf dem Tisch der Presseinrichtung entlang der X-Achse verschiebbar ist. Darüber hinaus weist die Arretierungseinrichtung vorzugsweise eine Aufnahmeplatte auf, die auf der Klemmplatte angeordnet ist und die Werkstückaufnahme trägt, wobei die Aufnahmeplatte entlang der Y-Achse relativ zu der Klemmplatte verschiebbar ist. Diese Verschiebbarkeit der Aufnahmeplatte relativ zu der Klemmplatte kann beispielsweise durch eine Gleitführung (z.B. Schwalbenschwanzführung, Nut-Feder-Führung) bewirkt werden. Zum Festklemmen der beiden Linearführungen wird die Klemmplatte dann nach unten auf die Tischplatte der Presseinrichtung gezogen, wodurch eine reibschlüssige Verbindung zwischen der Klemmplatte und der Tischplatte erzeugt wird, die zu einer Arretierung der Klemmplatte führt. Dabei wird auch die Aufnahmeplatte auf die Tischplatte gedrückt, so dass auch die Aufnahmeplatte aufgrund der reibflüssigen Verbindung zwischen der Aufnahmeplatte und der Tischplatte festgeklemmt wird.

Zum Herunterziehen der Klemmplatte weist die Arretierungseinrichtung vorzugsweise ein Druckstück auf, das von unten aus dem Tisch der Presseinrichtung nach oben ragt und ausfahrbar und einfahrbar ist, wobei das Druckstück die Klemmplatte ergreift, so dass das Druckstück die Klemmplatte bei einer Abwärtsbewegung auf die Tischplatte der Presseinrichtung drückt. Die Klemmplatte ist hierbei vorzugsweise relativ zu dem Druckstück entlang der X-Achse verschiebbar.

Im ausgefahrenen Zustand des Druckstücks ist also die Klemmplatte relativ zu dem Druckstück verschiebbar, wie auch die Aufnahmeplatte dann relativ zu der Klemmplatte verschiebbar ist.

Im eingefahrenen Zustand des Druckstücks drückt das Druckstück die Klemmplatte dagegen auf die Tischplatte der Presseinrichtung, wodurch die Klemmplatte festgeklemmt wird. Dabei drückt die Klemmplatte dann auch die Aufnahmeplatte auf die Tischplatte der Presseinrichtung, so dass auch die Aufnahmeplatte festgeklemmt wird. Hierbei ist es vorteilhaft, wenn das Druckstück von unten mittig durch die Klemmplatte hindurchragt, so dass das Druckstück die erforderliche Klemmkraft mittig in die Klemmplatte einleitet.

Die beiden vorstehend erwähnten Linearführungen können beispielsweise als Gleitführung und/oder als Schienenführung ausgebildet sein, jedoch sind grundsätzlich auch andere Typen von Linearführungen im Rahmen der Erfindung realisierbar.

Ferner ist zu erwähnen, dass zumindest eine der Linearführungen vorzugsweise einen Griff aufweist, um die Werkstückaufnahme manuell zu verschieben. In dem bevorzugten Ausführungsbeispiel ist der Griff zum Positionieren der Werkstückaufnahme an der oben befindlichen Aufnahmeplatte angeordnet, so dass der Griff sowohl eine Positionierung entlang der X-Achse als auch eine Positionierung entlang der Y-Achse ermöglicht.

Hierbei ist zu erwähnen, dass die erfindungsgemäße Positioniereinrichtung vorzugsweise keinen eigenen Linearantrieb aufweist, um die Werkstückaufnahme in der gewünschten Position zu positionieren. Dadurch unterscheidet sich die erfindungsgemäße Positioniereinrichtung beispielsweise auch von herkömmlichen Koordinatentischen, die Spindelantriebe aufweisen, die beispielsweise mittels einer Kurbel manuell bedient werden können.

Ferner ist zu erwähnen, dass die erfindungsgemäße Positioniereinrichtung eine geringe Bauhöhe aufweist, die ausreichend klein ist, um die Positioniereinrichtung auf einem Tisch einer herkömmlichen Presseinrichtung montieren zu können. Die Bauhöhe der Positioniereinrichtung ist deshalb vorzugsweise kleiner als 10 cm, 8 cm oder sogar kleiner als 5 cm.

Darüber hinaus ist zu erwähnen, dass die Erfindung auch eine komplette Presseinrichtung (z.B. Längspresseinrichtung) mit einer erfindungsgemäßen Positioniereinrichtung umfasst.

Dies ermöglicht die funktionale Integration der erfindungsgemäßen Positioniereinrichtung in die Presseinrichtung, indem eine zentrale Steuereinheit der Presseinrichtung auch die Positioniereinrichtung ansteuert. Die zentrale Steuereinheit der Presseinrichtung gibt hierbei nur dann einen Pressvorgang frei, wenn die beiden Linearführungen arretiert sind, wohingegen die zentrale Steuereinheit einen Pressvorgang der Presseinrichtung ansonsten sperrt.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine Perspektivansicht einer erfindungsgemäßen Positioniereinrichtung,
- Figur 2: eine Perspektivansicht der Positioniereinrichtung aus Figur 1 mit abgenommener Aufnahmeplatte,
- Figur 3: eine Vorderansicht der Positioniereinrichtung aus den Figuren 1 und 2,
- Figur 4: eine Aufsicht auf die Positioniereinrichtung gemäß den Figuren 1 bis 3,
- Figur 5: eine Rückansicht der Positioniereinrichtung aus den Figuren 1 bis 4,
- Figur 6: eine Schnittansicht entlang der Schnittlinie A-A in Figur 3,
- Figur 7: eine schematische Darstellung einer erfindungsgemäßen Positioniereinrichtung mit einem Fußpedal zur Druckbeaufschlagung eines Klemmzylinders der Positioniereinrichtung,
- Figur 8: eine schematische Darstellung eines alternativen Ausführungsbeispiels einer erfindungsgemäßen Positioniereinrichtung, die in eine Presseinrichtung integriert ist, sowie
- Figur 9: eine Perspektivansicht einer erfindungsgemäßen Längspresseinrichtung, wobei die erfindungsgemäße Positioniereinrichtung zur Vereinfachung nicht dargestellt ist.

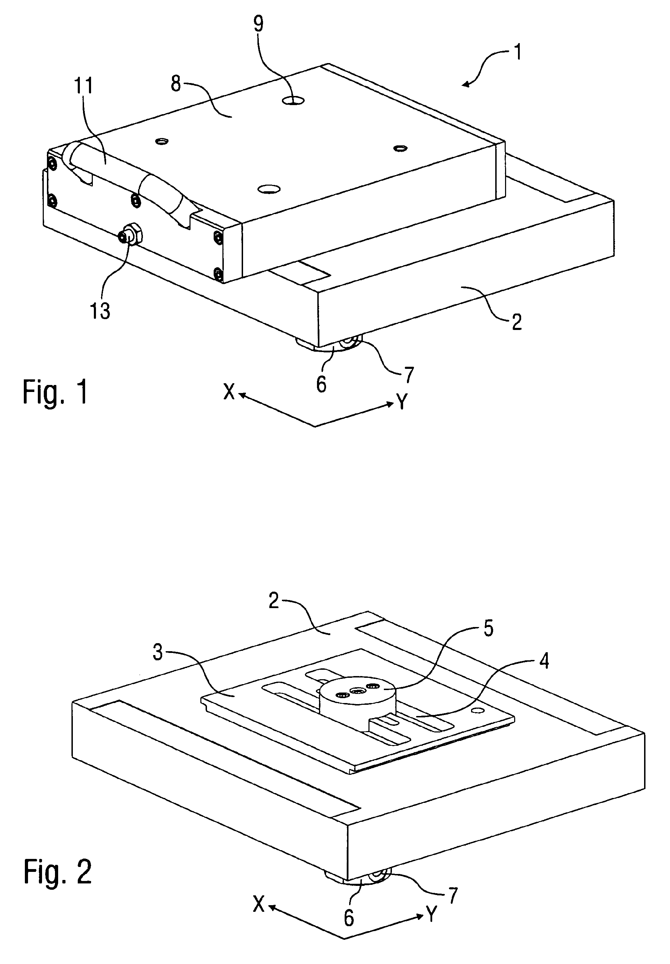

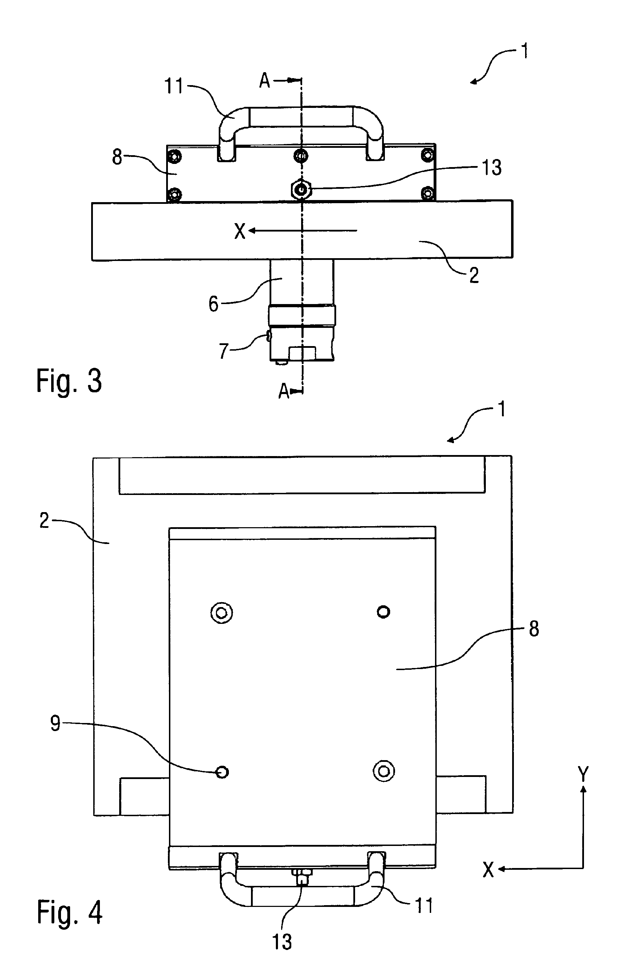

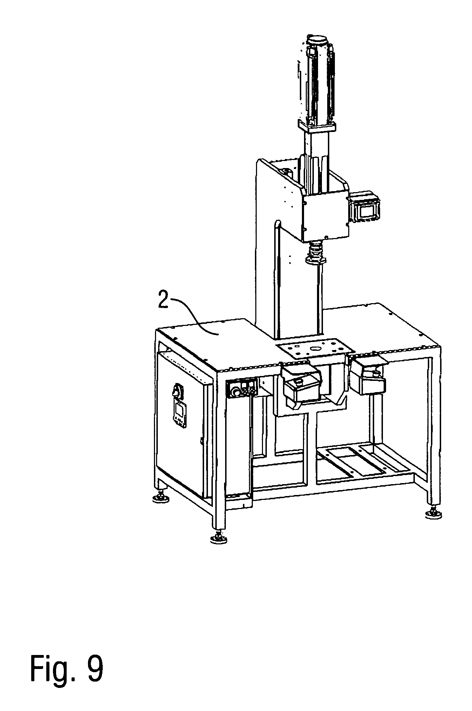

Die Figuren 1 bis 6 zeigen eine erfindungsgemäße Positioniereinrichtung 1, die auf einem Tisch 2 einer Längspresseinrichtung montiert ist, wie sie exemplarisch in Figur 9 dargestellt ist. Es ist jedoch zu erwähnen, dass die Längspresseinrichtung ansonsten in herkömmlicher Weise ausgebildet sein kann und deshalb nicht näher beschrieben werden muss.

Auf dem Tisch 2 der Längspresseinrichtung befindet sich eine Klemmplatte 3, die entlang einer X-Achse linear verschiebbar ist. Die Klemmplatte 3 weist hierzu zwei Führungsschlitze 4 auf, die in X-Richtung verlaufen, wobei ein Druckstück 5 durch die Führungsschlitze 4 der Klemmplatte 3 nach oben hindurchragt, so dass die Führungsschlitze 4 mit dem Druckstück 5 eine Gleitführung bilden, die eine lineare Verschiebung der Klemmplatte 3 entlang der X-Achse ermöglicht.

Das Druckstück 5 kann von einem druckmittelbeaufschlagten Klemmzylinder 6 ausgefahren oder eingefahren werden, um die Klemmplatte 3 entweder festzuklemmen oder freizugeben.

Zum Festklemmen der Klemmplatte 3 auf dem Tisch 2 der Längspresseinrichtung weist der Klemmzylinder 6 integrierte Tellerfedern auf, die das Druckstück 5 ohne eine ausreichende Druckmittelbeaufschlagung nach unten ziehen.

Zum Lösen der Klemmverbindung wird der Klemmzylinder 6 dagegen über einen Druckmittelanschluss 7 mit einem ausreichenden Hydraulikdruck beaufschlagt, um die Federkraft der integrierten Tellerfedern zu überwinden und das Druckstück 5 dadurch auszufahren, woraufhin die Klemmverbindung zwischen der Klemmplatte 3 und dem Tisch 2 gelöst wird, so dass die Klemmplatte 3 dann in X-Richtung auf dem Tisch 2 verschoben werden kann.

Auf der Klemmplatte 3 ist eine Aufnahmeplatte 8 angeordnet, wobei die Aufnahmeplatte 8 relativ zu der Klemmplatte 3 entlang einer Y-Achse verschiebbar ist. Hierzu ist die Aufnahmeplatte 8 durch eine Gleitführung in Form einer Nut-Feder-Verbindung mit der Klemmplatte 3 verbunden. Die Nut-Feder-Verbindung zwischen der Aufnahmeplatte 8 und der Klemmplatte 3 bewirkt beim Festklemmen der Klemmplatte 3 auf dem Tisch 2, dass auch die Aufnahmeplatte 8 auf dem Tisch 2 festgeklemmt wird, da die Nut-Feder-Verbindung die Aufnahmeplatte 8 dann ebenfalls nach unten auf den Tisch 2 drückt. Eine Abwärtsbewegung des Druckstücks 5 bewirkt also sowohl ein Festklemmen der Klemmplatte 3 als auch ein Festklemmen der Aufnahmeplatte 8.

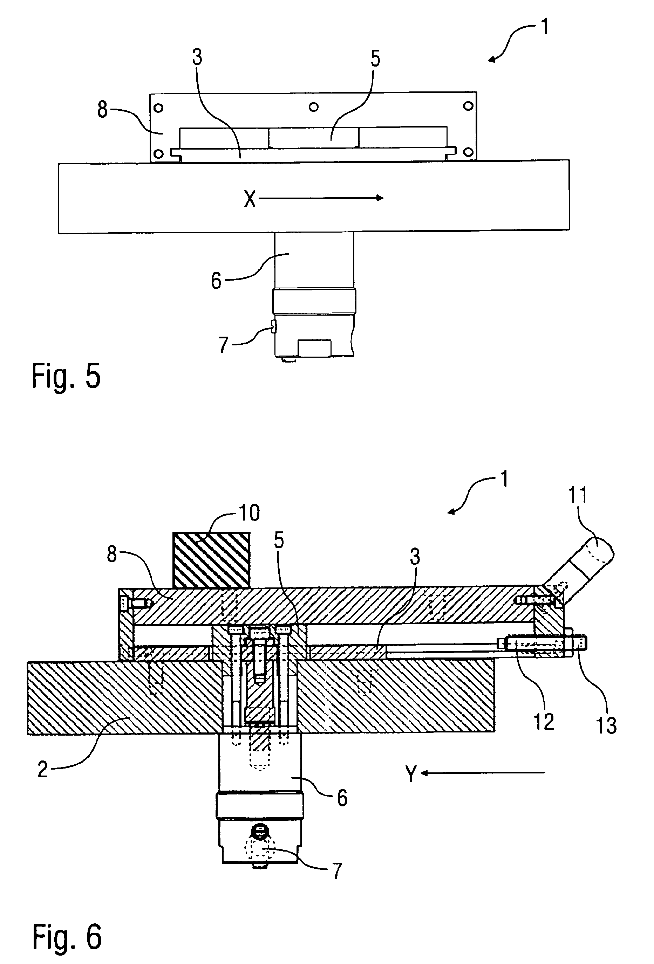

An der Oberseite der Aufnahmeplatte 8 befinden sich mehrere Bohrungen 9, die es ermöglichen, eine Werkstückaufnahme 10 auf der Aufnahmeplatte 8 festzuschrauben, wie insbesondere aus Figur 6 ersichtlich ist.

Bei der Werkstückaufnahme 10 kann es sich beispielsweise um ein Prisma, einen Winkel oder verschiedene Anschlagbolzen handeln, was an sich aus dem Stand der Technik bekannt ist und deshalb nicht näher beschrieben werden muss.

Darüber hinaus besteht im Rahmen der Erfindung die Möglichkeit, dass an den Bohrungen 9 Standardspannvorrichtungen festgeschraubt werden, wie beispielsweise einfache Spannstöcke oder Mehrbackenfutter, die über Zwischenplatten befestigt werden können. Es ist damit möglich, eine Einrichtung zu schaffen, die an vielfältige Werkstücke für verschiedenste Operationen angepasst werden kann. Bei Wiederholteilen ist der Nutzen am größten.

Weiterhin besteht im Rahmen der Erfindung die Möglichkeit, dass die Werkstückaufnahme drehbar ist. Die einfachste Realisierung ist mit einer runden Scheibe mit Winkelskala und einem Klemmring. Dies wäre ähnlich den Standardvorrichtungen mit den Bohrungen 9 gut und positionsgenau zu befestigen.

An der Vorderseite der Aufnahmeplatte 8 ist ein Griff 11 festgeschraubt, der eine Positionierung der Aufnahmeplatte 8 innerhalb der Längspresseinrichtung ermöglicht und zwar sowohl in X-Richtung als auch in Y-Richtung.

Darüber hinaus weist die erfindungsgemäße Positioniereinrichtung einen Anschlag 12 auf, um den Bewegungsspielraum der Aufnahmeplatte 8 in der Y-Richtung zu begrenzen, wie insbesondere aus Figur 6 ersichtlich ist. Der Anschlag 12 kann hierbei durch eine Stellschraube 13 stufenlos eingestellt werden.

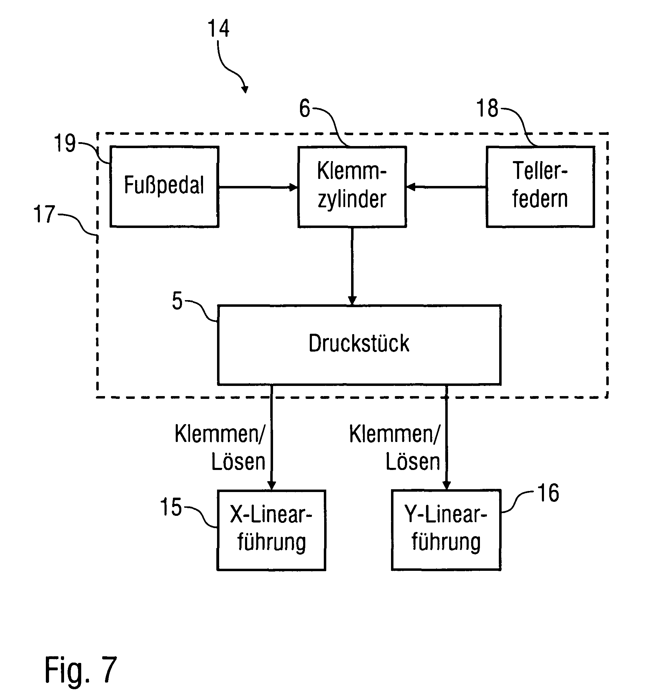

Figur 7 zeigt eine schematische Darstellung einer erfindungsgemäßen Positioniereinrichtung 14, die zur Positionierung eines Werkstücks in einer Presseinrichtung (z.B. Längspresseinrichtung) dient.

Hierzu weist die Positioniereinrichtung 14 zwei Linearführungen 15, 16 auf, die in X-Richtung bzw. in Y-Richtung verschiebbar sind und eine entsprechende Positionierung einer Werkstückaufnahme in der Presseinrichtung ermöglichen.

Zur Arretierung der beiden Linearführungen 15, 16 ist eine Arretierungseinrichtung 17 vorgesehen, die in der vorstehend beschriebenen und in den Figuren 1 bis 6 dargestellten Weise funktioniert und deshalb im Folgenden nur kurz beschrieben wird, wobei im Folgenden dieselben Bezugszeichen wie in der vorstehenden Beschreibung zu den Figuren 1 bis 6 verwendet werden.

So ermöglicht der Klemmzylinder 6 ein Ausfahren bzw. Einfahren des Druckstücks 5, um die Linearführungen 15, 16 entweder festzuklemmen oder die Klemmverbindung zu lösen.

Zum Festklemmen der beiden Linearführungen 15, 16 weist die Arretierungseinrichtung 17 Tellerfedern 18 auf, die in den Klemmzylinder 6 integriert sind und das Druckstück 5 einfahren, wenn der Klemmzylinder 6 nicht mit einem ausreichenden Druck zum Lösen der Klemmverbindung beaufschlagt wird.

Zum Lösen der Klemmverbindung der beiden Linearführungen 15, 16 dient dagegen ein Fußpedal 18, das von einem Bediener der Presseinrichtung niedergedrückt werden kann, um den nötigen Hydraulikdruck zu erzeugen, woraufhin dann der Klemmzylinder 6 das Druckstück 5 entgegen der Kraft der Tellerfedern 18 ausfährt und dadurch die Klemmung der beiden Linearführungen 15, 16 löst.

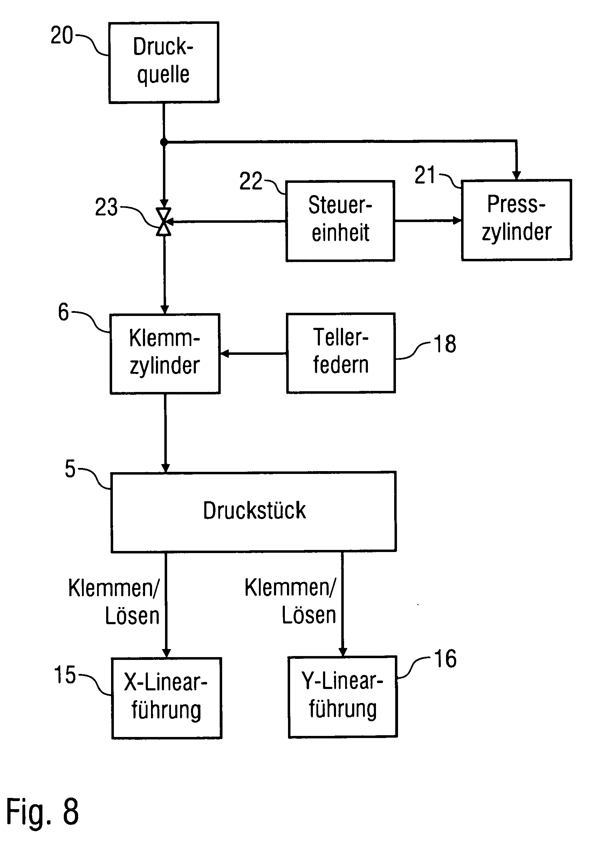

Figur 8 zeigt eine alternative Variante einer erfindungsgemäßen Positioniereinrichtung, die teilweise mit der Variante gemäß Figur 7 übereinstimmt, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass der erforderliche Hydraulikdruck zum Lösen der Klemmverbindung der Linearführungen 15, 16 nicht durch das Fußpedal 19 erzeugt wird, sondern durch eine in der Presseinrichtung ohnehin vorhandene Druckquelle 20. Die Druckquelle 20 ist zum einen mit dem ohnehin vorhandenen Presszylinder 21 der Presseinrichtung verbunden, wobei der Presszylinder 21 der Presseinrichtung von einer zentralen Steuereinheit 22 der Presseinrichtung angesteuert wird.

Die zentrale Steuereinheit 22 der Presseinrichtung steuert auch ein Ventil 23 an, das die Druckquelle 20 der Presseinrichtung mit dem Klemmzylinder 6 der erfindungsgemäßen Positioniereinrichtung 14 verbindet.

Die Steuereinheit 22 gibt einen Pressvorgang des Presszylinders 21 dann nur frei, wenn das Ventil 23 geschlossen ist und die Tellerfedern 18 somit das Druckstück 5 eingefahren haben, um die beiden Linearführungen 15, 16 festzuklemmen.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den Merkmalen der jeweils in Bezug genommenen Ansprüche.

### Bezugszeichenliste:

- 1: Positioniereinrichtung
- 2: Tisch
- 3: Klemmplatte
- 4: Führungsschlitz
- 5: Druckstück
- 6: Klemmzylinder
- 7: Druckmittelanschluss
- 8: Aufnahmeplatte
- 9: Bohrungen
- 10: Werkstückaufnahme
- 11: Griff
- 12: Anschlag
- 13: Stellschraube
- 14: Positioniereinrichtung
- 15: Linearführung
- 16: Linearführung
- 17: Arretierungseinrichtung
- 18: Tellerfedern
- 19: Fußpedal
- 20: Druckquelle
- 21: Presszylinder
- 22: Steuereinheit
- 23: Ventil

## Patentansprüche

1. Positioniereinrichtung (1; 14) zur Positionierung eines Werkstücks in einer Presseinrichtung, die das Werkstück in einer bestimmten Pressrichtung presst, mit
a) einer Werkstückaufnahme (10) zur Aufnahme des Werkstücks,
**gekennzeichnet durch**
b) eine erste Linearführung (15) zum linearen Verschieben der Werkstückaufnahme (10) in der Presseinrichtung entlang einer X-Achse, wobei die X-Achse quer zu der Pressrichtung ausgerichtet ist, und
c) eine zweite Linearführung (16) zum linearen Verschieben der Werkstückaufnahme (10) in der Presseinrichtung entlang einer Y-Achse, wobei die Y-Achse quer zu der X-Achse und quer zu der Pressrichtung ausgerichtet ist.

2. Positioniereinrichtung (1; 14) nach Anspruch 1, **gekennzeichnet durch** eine Arretierungseinrichtung (17) zur Arretierung der ersten Linearführung (15) und/oder der zweiten Linearführung (16).

3. Positioniereinrichtung (1; 14) nach Anspruch 2,
**dadurch gekennzeichnet,**
a) **dass** die Arretierungseinrichtung (17) eine stufenlose Arretierung der ersten Linearführung (15) und/oder der zweiten Linearführung (16) in verschiedenen, stufenlos einstellbaren Positionen ermöglicht, und/oder
b) **dass** die Arretierungseinrichtung (17) die erste Linearführung (15) und/oder die zweite Linearführung (16) reibschlüssig arretiert.

4. Positioniereinrichtung (1; 14) nach einem der Ansprüche 2 bis 3, **dadurch gekennzeichnet,**
a) **dass** die Arretierungseinrichtung (17) einen Klemmzylinder (6) aufweist, um die erste Linearführung (15) und/oder die zweite Linearführung (16) festzuklemmen, und
b) **dass** der Klemmzylinder (6) mindestens ein Federelement (18), insbesondere eine Tellerfeder (18), aufweist, um die erste Linearführung (15) und/oder die zweite Linearführung (16) mit der Federkraft des Federelements (18) festzuklemmen,
c) **dass** der Klemmzylinder (6) einen Druckmittelanschluss (7) aufweist, um ein fluides Druckmittel zum Lösen der Klemmung zuzuführen.

5. Positioniereinrichtung (1; 14) nach Anspruch 4,
**gekennzeichnet durch**
a) ein Betätigungsglied (19), insbesondere ein Fußpedal (19) oder einen Handgriff, zur muskelkraftbetriebenen Druckmittelbeaufschlagung des Druckmittelanschlusses (7) des Klemmzylinders (6) **durch** eine Bedienungsperson, oder
b) eine Steuereinheit (22) zur gesteuerten Druckmittelbeaufschlagung des Druckmittelanschlusses (7).

6. Positioniereinrichtung (1; 14) nach einem der vorhergehenden Ansprüche, **gekennzeichnet durch**
a) einen ersten Anschlag zum einseitigen oder beidseitigen Begrenzen der ersten Linearführung (15), und/oder
b) ein erstes Stellglied zum Einstellen des ersten Anschlags, und/oder
c) einen zweiten Anschlag (12) zum einseitigen oder beidseitigen Begrenzen der zweiten Linearführung (16), und/oder
d) ein zweites Stellglied (13) zum Einstellen des zweiten Anschlags (12).

7. Positioniereinrichtung (1; 14) nach einem der vorhergehenden Ansprüche, **gekennzeichnet durch**
a) ein erstes Lineal zur Anzeige der Position der ersten Linearführung (15), und/oder
b) ein zweite Lineal zur Anzeige der Position der zweiten Linearführung (16).

8. Positioniereinrichtung (1; 14) nach einem der vorhergehenden Ansprüche, **gekennzeichnet durch**
a) eine Klemmplatte (3), die entlang der X-Achse verschiebbar ist, und
b) eine Aufnahmeplatte (8), die auf der Klemmplatte (3) angeordnet ist und die Werkstückaufnahme (10) trägt, wobei die Aufnahmeplatte (8) entlang der Y-Achse relativ zu der Klemmplatte (3) verschiebbar ist.

9. Positioniereinrichtung (1; 14) nach Anspruch 8,
**dadurch gekennzeichnet,**
a) **dass** die Arretierungseinrichtung (17) zum Festklemmen sowohl der Klemmplatte (3) als auch der Aufnahmeplatte (8) ein Druckstück (5) aufweist, und/oder
b) **dass** die Klemmplatte (3) relativ zu dem Druckstück (5) entlang der X-Achse verschiebbar ist, und/oder
c) **dass** das Druckstück (5) ausfahrbar und einfahrbar ist, wobei das Druckstück (5) die Klemmplatte (3) und die Aufnahmeplatte (8) im eingefahrenen Zustand festklemmt, wohingegen das Druckstück (5) die Klemmplatte (3) und die Aufnahmeplatte (8) im ausgefahrenen Zustand freigibt, und/oder
d) **dass** das Druckstück (5) von unten mittig durch die Klemmplatte (3) hindurch ragt, so dass das Druckstück (5) eine Klemmkraft mittig in die Klemmplatte (3) einleitet.

10. Positioniereinrichtung (1; 14) nach einem der vorhergehenden Ansprüche, **dadurch gekennzeichnet,**
a) **dass** die erste Linearführung (15) und/oder die zweite Linearführung (16) eine Gleitführung aufweist, und/oder
b) **dass** die erste Linearführung (15) und/oder die zweite Linearführung (16) eine Schienenführung aufweist.

11. Positioniereinrichtung (1; 14) nach einem der vorhergehenden Ansprüche, **dadurch gekennzeichnet,**
a) **dass** die erste Linearführung (15) und/oder die zweite Linearführung (16) einen Griff (11) aufweisen, um die Werkstückaufnahme (10) manuell zu verschieben, und/oder
b) **dass** die erste Linearführung (15) und/oder die zweite Linearführung (16) keinen eigenen Linearantrieb aufweisen, insbesondere keinen Spindelantrieb, sondern eine manuelle Bedienung ermöglichen.

12. Positioniereinrichtung (1; 14) nach einem der vorhergehenden Ansprüche, **dadurch gekennzeichnet,**
a) **dass** die Positioniereinrichtung (1; 14) eine Bauhöhe aufweist, die hinreichend klein ist, um die Positioniereinrichtung (1; 14) auf einem Tisch (2) der Presseinrichtung montieren zu können, und/oder
b) **dass** die Bauhöhe der Positioniereinrichtung (1; 14) kleiner ist als 10cm, 8cm oder 5cm.

13. Presseinrichtung mit einer Positioniereinrichtung (1; 14) nach einem der vorhergehenden Ansprüche.

14. Presseinrichtung nach Anspruch 13, **gekennzeichnet durch** eine zentrale Steuereinheit (22), die sowohl das Pressen des Werkstücks steuert als auch die Positioniereinrichtung (1; 14).

15. Presseinrichtung nach Anspruch 14, **dadurch gekennzeichnet, dass** die zentrale Steuereinheit (22) einen Pressvorgang der Presseinrichtung nur dann freigibt, wenn die beiden Linearführungen (15, 16) arretiert sind, wohingegen die zentrale Steuereinheit (22) den Pressvorgang der Presseinrichtung sperrt, wenn nicht die beiden Linearführungen (15, 16) arretiert sind.
